Europäisches Patentamt

European Patent Office

Office européen des brevets

(19)

(11) Numéro de publication: **0 084 995**

**B1**

(12) **FASCICULE DE BREVET EUROPÉEN**

(45) Date de publication du fascicule du brevet:
13.08.86

(51) Int. Cl.⁴: **B 63 H 9/06**

(21) Numéro de dépôt: **83400093.7**

(22) Date de dépôt: **14.01.83**

(54) **Système de propulsion pour engins et navires à voile.**

(30) Priorité: **19.01.82 FR 8200743**

(43) Date de publication de la demande:
**03.08.83 Bulletin 83/31**

(45) Mention de la délivrance du brevet:
**13.08.86 Bulletin 86/33**

(84) Etats contractants désignés:
**DE FR GB IT NL SE**

(56) Documents cité:
**DE-C-524 605**
**FR-A-1 484 739**
**FR-A-2 382 370**
**US-A-1 670 936**
**US-A-3 295 487**
**US-A-3 646 902**

(73) Titulaire: **GROUPE FINOT, 1, rue Pierre Vaudenay
(les Metz), F-78350 Jouy en Josas (FR)**

(72) Inventeur: **Finot, Jean- Marie, 44, rue du Docteur
Kurzenne, F-78350 Jouy en Josas (FR)**

(74) Mandataire: **Armengaud, Alain, Cabinet
ARMENGAUD AINE 3 Avenue Bugeaud, F-75116
Paris (FR)**

LIBER, STOCKHOLM 1986

## Description

La présente invention concerne un système de propulsion pour engins nautiques, notamment bateaux à voile.

On connaît des systèmes de propulsion pour engins nautiques qui comprennent une voile, munie d'un ou de plusieurs plans hydroporteurs ou "foils" directement montés sur l'extrémité de la voilure.

Le brevet US-A- 32 95 487 décrit un engin à hydrofoils, destiné à se déplacer horizontalement, dans lequel la portance est obtenue par une voilure, et l'effet anti-dérive à l'aide d'un plan de dérive vertical central. Dans cet engin, les plans hydroporteurs sont contrôlables en flèche, et ils tirent leur portance essentiellement de leur flottabilité propre, étant donné qu'ils sont constitués par des flotteurs statiques, immergés uniquement à l'arrêt ou à faible vitesse.

Le brevet DE-C- 524 605 décrit une voilure à surface portante dans laquelle des stabilisateurs sont surmontés par des flotteurs dont les parois latérales présentent une forme et une position permettant d'augmenter la poussée exercée par les stabilisateurs, afin de la faire agir à un niveau plus élevé dès qu'une augmentation de la poussée du vent sur la voilure provoque l'enfoncement d'un flotteur dans l'eau. Dans un tel système, la stabilisation de la voilure, par vent fort, est donc essentiellement obtenue par l'enfoncement des flotteurs qui sont situés au-dessus des stabilisateurs.

L'invention se propose d'apporter un système de propulsion pour engins nautiques, notamment bateaux à voile, du type composé essentiellement d'une voile munie d'un ou de plusieurs plans hydroporteurs, généralement appelés "foils", montés directement sur l'extrémité de la voilure, la conception de ce système étant telle qu'elle permet d'annuler le couple de chavirage d'un bateau, qui limite toujours l'aptitude du bateau à porter une surface de voilure déterminée, en créant une force de sustentation et de propulsion appliquée à un point de fixation virtuel ou réel sur le bateau, dont la limite est déterminée uniquement par le poids de l'engin flottant ou du bateau ainsi équipé.

En conséquence, cette invention concerne un système de propulsion pour engins nautiques, notamment bateaux à voiles, constitué par une voile comportant un ou plusieurs plans hydroporteurs directement montés sur l'extrémité de la voilure, les plans hydroporteurs étant directement contrôlables en flèche, caractérisé en ce que les plans hydroporteurs sont également contrôlés en incidence, afin de contrôler à la fois la portance et l'immersion, l'ensemble étant monté sur un flotteur par l'intermédiaire d'un moyen de support, de manière que l'ensemble voilure + plans hydroporteurs puisse basculer d'un bord sur l'autre, le moment de chavirage du bateau étant annulé par le couple de forces voilure + plans hydroporteurs et par le moment du poids du flotteur, la force propulsive de la voilure et la force exercée sur les plans hydroporteurs concourant à proximité du centre de gravité du bateau.

On comprend que, dans le système objet de cette invention, l'ensemble voilure-plans hydroporteurs constitue un bloc unique anti-dérive permettant d'annuler le moment de chavirage, l'ensemble voilure-plans hydroporteurs étant monté sur le flotteur de l'engin ou sur la coque du bateau par l'intermédiaire d'un ou de plusieurs mâts ou de bielles, pouvant être articulés par rapport à la coque ou flotteur, et/ou par rapport à la voilure.

Selon un mode de réalisation de l'invention, l'ensemble voilure-plans hydroporteurs est rigidement solidaire de la coque ou du flotteur sur lequel il est monté, et la coque bascule avec ledit ensemble lors des changements de bord.

Selon un second mode de réalisation de l'invention, l'ensemble voilure-plans hydroporteurs est articulé par rapport au flotteur, afin de constituer un système isolé qui, lors des virements de bords, bascule sur ce flotteur, qui reste fixe.

Selon une application particulière de l'invention, l'ensemble voilure-plans hydroporteurs peut être utilisé comme propulseur auxiliaire d'un navire à voile ou à moteur en le montant à l'arrière dudit navire à la manière d'un moteur hors-bord, à l'aide d'un matereau articulé sur la poupe du navire.

Selon une autre application destinée à la propulsion des navires de charge, on groupe plusieurs ensembles voilure-plans hydroporteurs les uns derrière les autres, des moyens étant alors prévus pour les rabattre sur le pont du navire.

Selon l'invention, on prévoit des moyens de commande manuels, pouvant être remplacés ou complétés par des systèmes de commande électriques, hydrauliques ou pneumatiques, éventuellement assistés par des processeurs.

D'autres caractéristiques et avantages de cette invention ressortiront de la description faite ci-après en référence aux dessins annexés, qui en illustrent divers exemples de réalisation et d'application, dépourvus de tout caractère limitatif. Sur les dessins:

- la Figure 1 est une vue schématique en bout d'un engin flottant pourvu d'un système de propulsion selon l'invention;

- la Figure 2 est une vue en perspective d'un engin flottant selon la Figure 1;

- la Figure 3 est une vue en élévation latérale de l'engin flottant selon les Figures 1 et 2, représenté tribord amures (voile basculée à gauche);

- les Figures 4 à 6 sont des schémas destinés à faire comprendre le fonctionnement du système de propulsion selon l'invention;

- les Figures 7 et 8 sont des schémas représentant l'engin flottant selon les Figures 1 à 3, vu en bout, respectivement babord amures et tribord amures;

- la Figure 9 est une vue de l'engin flottant selon la Figure 1, en coupe par un plan perpendiculaire à la voilure;

- la Figure 10 représente l'engin vu de dessus, tribord amures;

- la Figure 11 est une vue de dessus de l'engin selon l'invention, avec la voile orientée avec une flèche basse en avant;

- la Figure 12 est une vue de dessus d'une variante selon l'invention comportant des voiles supplémentaires;

- la Figure 13 est une vue similaire à la Figure 1, représentant la variante avec coque fixe et ensemble voilure-plans hydroporteurs articulé par rapport à la coque;

- la Figure 14 illustre, en perspective, une autre variante de l'invention dans laquelle la voilure est tenue en un point unique, rassemblant toutes les commandes mécaniques;

- la Figure 15 représente, en perspective, une autre variante de l'invention, dans laquelle le basculement de l'ensemble voilure-plans hydroporteurs est obtenu par des volets;

- la Figure 16 illustre, en perspective, la variante dans laquelle l'incidence de la voile est sous l'action d'un plan aérodynamique;

- la Figure 17 illustre, en perspective, une variante comportant plusieurs flotteurs;

- les Figures 18 et 19 sont respectivement des vues schématiques, en perspective et en bout, montrant l'application de l'invention à un système de propulsion auxiliaire;

- la Figure 20 est une vue en bout représentant la position du système de propulsion par petit temps;

- les Figures 21 à 23 représentent respectivement, en bout, en perspective et en vue de dessus, la position de la voilure par vent très fort;

- la Figure 24 représente, en élévation latérale, l'application du système de propulsion selon l'invention à un navire de charge;

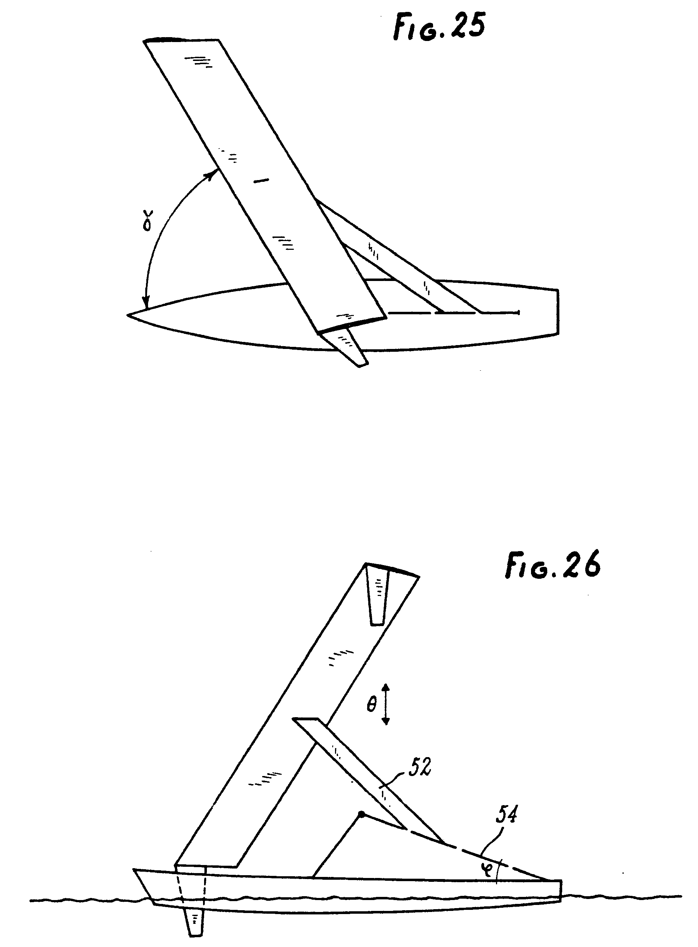

- les Figures 25 et 26 sont respectivement des vues de dessus et en élévation latérale d'une variante simplifiée de l'engin selon l'invention;

- les Figures 27 et 28 illustrent, en vue de dessus, une autre variante de l'invention comportant une voilure à éléments mobiles;

- la Figure 29 est une vue de dessus d'une autre variante, comportant une voilure articulée autour d'un longeron solidaire du mât et des plans hydrauliques;

- la Figure 30 illustre un détail de la Figure 29;

- la Figure 31 est une vue de dessus d'une autre variante de l'engin selon l'invention, comportant une voilure souple; et,

- la Figure 32 est une vue en bout représentant un engin selon l'invention pourvu d'une voilure repliable.

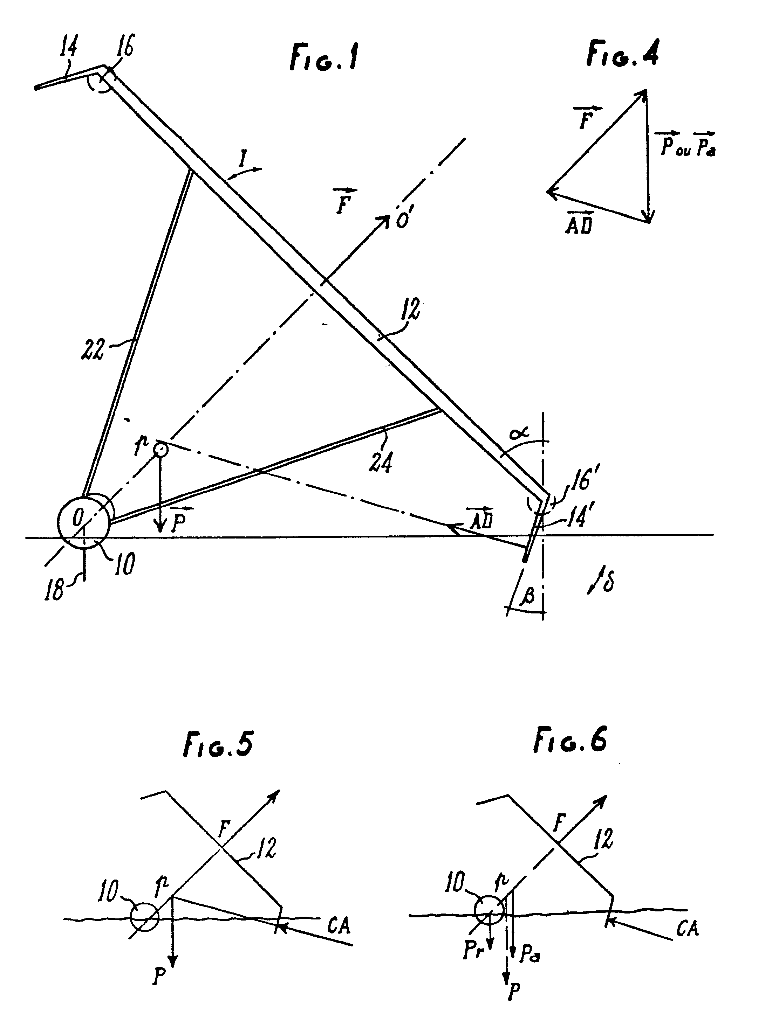

On se réfère en premier lieu aux Figures 1 à 6, qui se rapportent à un engin flottant muni d'un système de propulsion selon l'invention. Il s'agit là d'un exemple d'application relatif à un engin de vitesse pure.

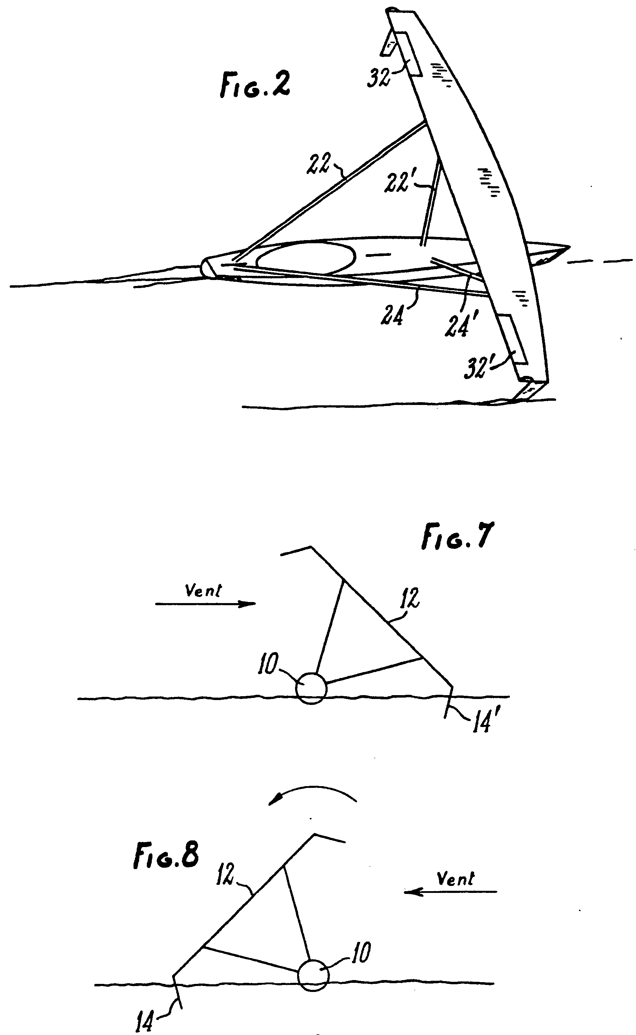

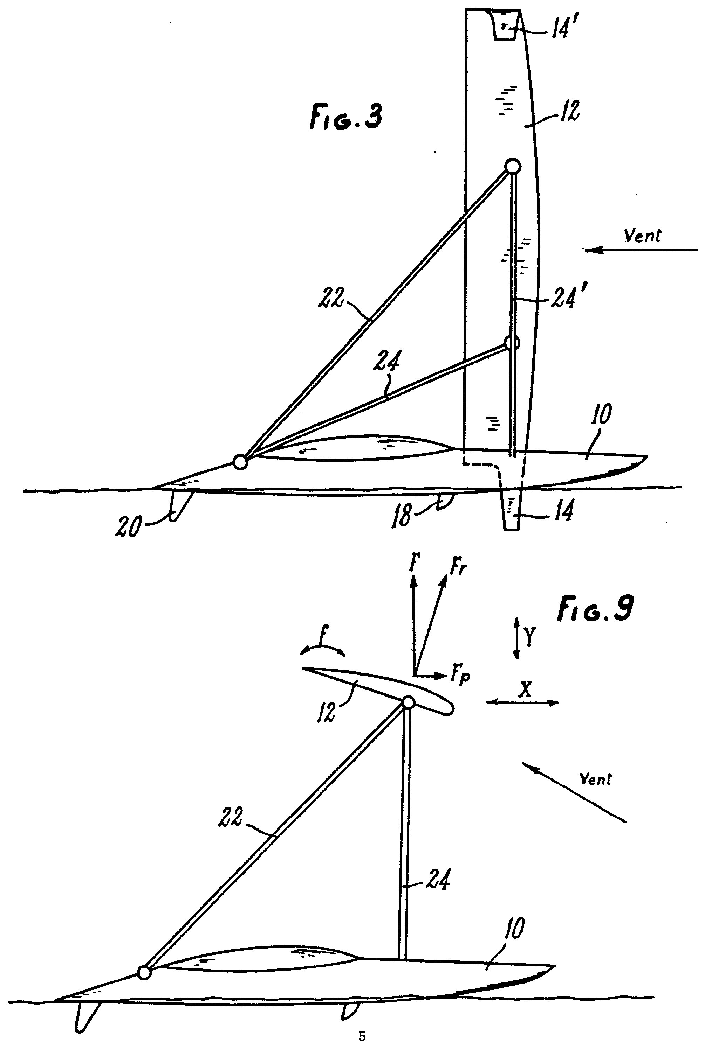

Le système de propulsion comprend une voilure rigide 12, aux extrémités de laquelle sont fixés des plans hydroporteurs ou "foils", articulés ou non, 14, 14', avec eventuellement des flotteurs auxiliaires 16-16'. Dans cet exemple de réalisation, le système de propulsion est monté sur le flotteur 10 par l'intermédiaire d'un ensemble de bielles 22-22', 24-24', qui sont couplées deux par deux, à l'avant et à l'arrière du flotteur (Figures 2 et 3) sur la voilure 12, sensiblement au centre de poussée.

Le flotteur 10 comprend une ou plusieurs dérives, telle que 18, et un gouvernail 20.

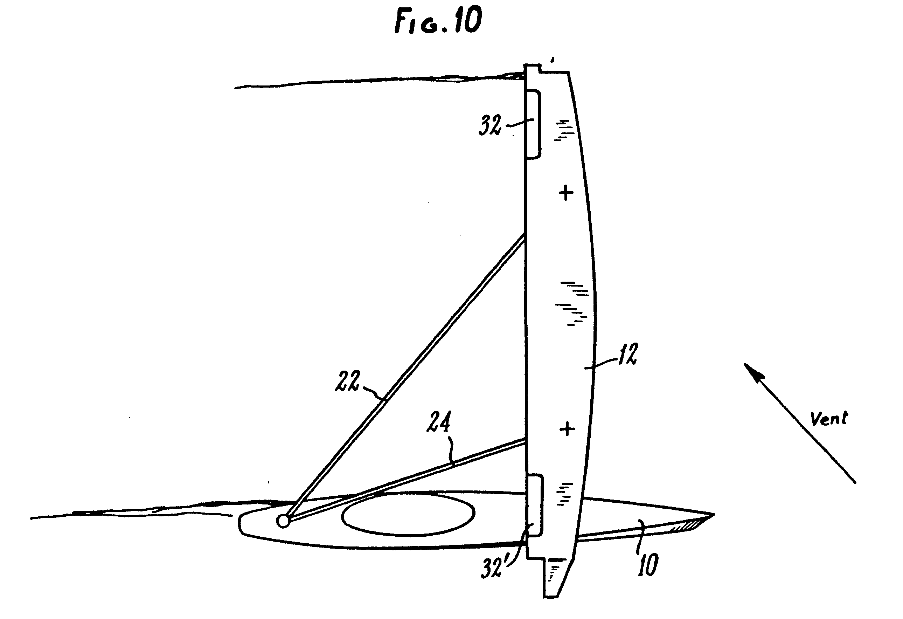

La voilure 12 est inclinée transversalement par rapport à la verticale, selon un angle $\hat{\alpha}$ et selon une incidence horizontale Î. Le plan hydroporteur en action 14' est incliné également par rapport à la verticale selon un angle $\beta$ et une incidence $\delta$. Les angles $\alpha$, $\beta$ et I, $\delta$ sont déterminés de façon que la force propulsive $\rightarrow$F de la voilure (Figures 4 à 6) et la force $\rightarrow$AD exercée sur le plan hydroporteur 14' par la poussée CA concourent à proximité du centre de gravité p du bateau, c'est-à-dire de l'ensemble constitué par le système de propulsion et le flotteur ($\alpha$ $\beta$), et que la résultante $\rightarrow$P de la force sur la dérive (plan hydroporteur) et sur le système de propulsion (voilure) soit verticale (I, $\delta$). De cette façon, il ne s'exerce aucun moment de chavirage sur le flotteur 10.

La conjonction des forces $\rightarrow$F, $\rightarrow$AD, $\rightarrow$P, et leur équilibre dynamique, obtenu par la situation et l'orientation respectives du flotteur 10, de la voilure 12 et des plans hydroporteurs 14, 14', constituent la base même du système de propulsion selon l'invention. Ce système de propulsion permet donc d'obtenir, sur un point de fixation réel ou virtuel, une résultante verticale dans le plan transversal (indépendamment, évidemment, de sa composante propulsive en avant). Lorsque la force $\rightarrow$F, s'exerçant sur la voilure 12, et celle $\rightarrow$AD qui s'exerce sur le plan hydroporteur en action 14' sontinsuffisantes pour compenser l'ensemble du poids P, les forces $\rightarrow$F et $\rightarrow$AD (Figure 6) còmpensent une partie Pa du poids P, le reste, Pr, étant com pensé par la flottabilité du flotteur 10.

Dans l'exemple de réalisation et d'application décrit ici en référence aux Figures 1 à 6, l'engin flottant est dissymétrique et ne peut marcher que sur un seul bord, c'est-à-dire qu'il ne peut recevoir le vent que sur un seul côté. Pour recevoir le vent de l'autre côté (Figures 7 et 8), l'ensemble de propulsion bascule, et l'engin peut marcher sur l'autre bord, la voilure 12 et les plans hydroporteurs 14-14' étant symétriques par rapportà l'axe 0-0'.

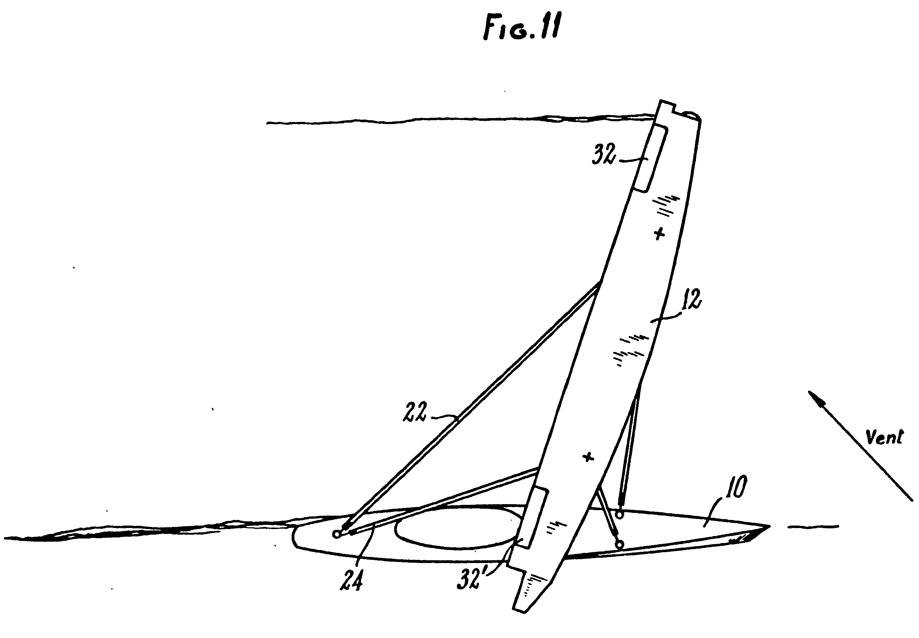

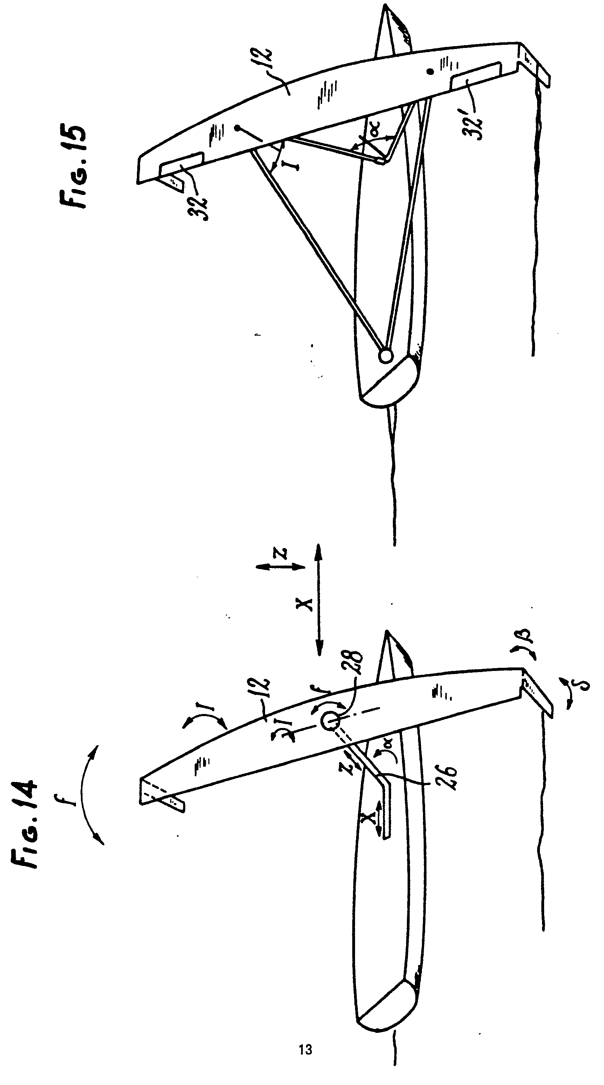

Comme décrit ci-dessus, dans l'exemple de réalisation représenté sur les Figures 1 à 11, le système de propulsion selon l'invention est tenu par les quatre bielles 22-22', 24-24'. Le barreur agit sur la verticalité ($\beta$) et l'incidence ($\delta$) des plans hydroporteurs 14-14', et il agit sur l'inclinaison ($\hat{\alpha}$) et l'incidence (Î) de la voilure 12. Pour répondre aux changements d'allure, il agit sur les positions longitudinale (X) et verticale (Z) de la voilure, ainsi que sur sa flèche (f), c'est-à-dire sur l'angle de la voilure par rapport à la ligne de foi du flotteur. Ces derniers réglages sont obtenus ici par le choix des longueurs relatives des bielles 22-22', 24-24', ou par l'intermédiaire d'une ou de deux bielles et de haubans. Dans la variante représentée sur la Figure 14, on obtientle même résultat avec un mât unique 26, ceci en fonction des dimensions du système propulsif et des efforts auxquels il est soumis. L'examen de la Figure 14 montre que la voilure est tenue en un point unique 28 du mât rassemblant toutes les commandes mécaniques.

Au départ, la voilure est rigide pour obtenir le meilleur rendement et le meilleur contrôle, et, selon l'invention, on prévoit d'ajouter (Figure 12), au moins par petit temps, une voile supplémentaire 30-30', pouvant être dépliée soit dans un sens b perpendiculaire à la voilure 12, soit dans un sens a transversal à cette voilure.

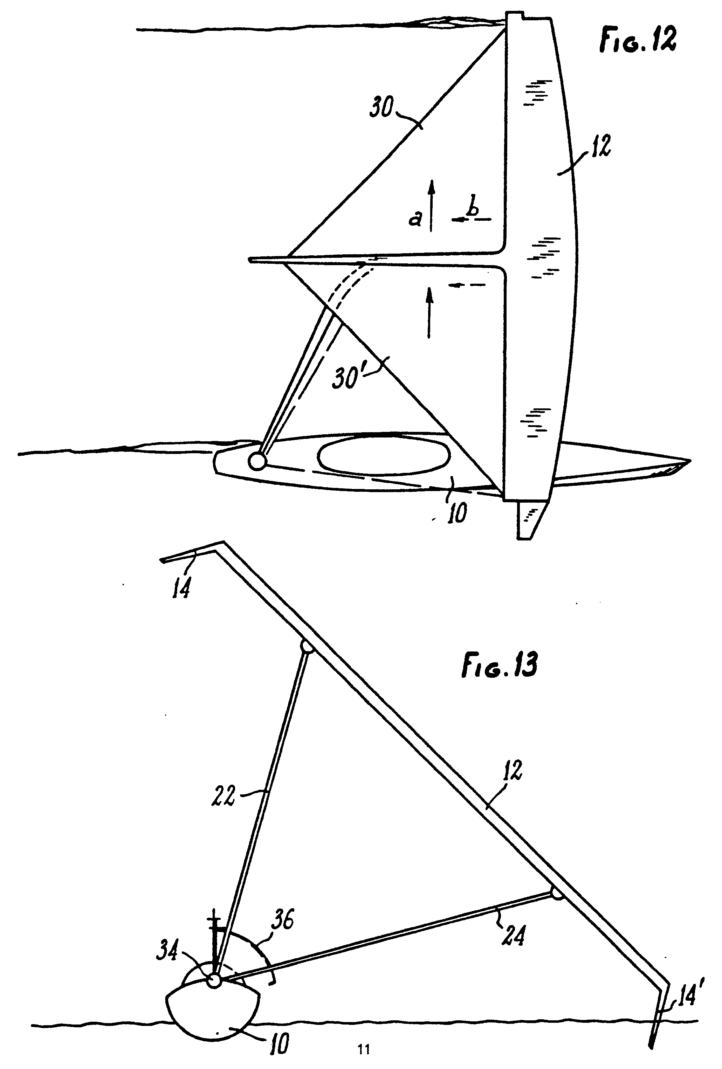

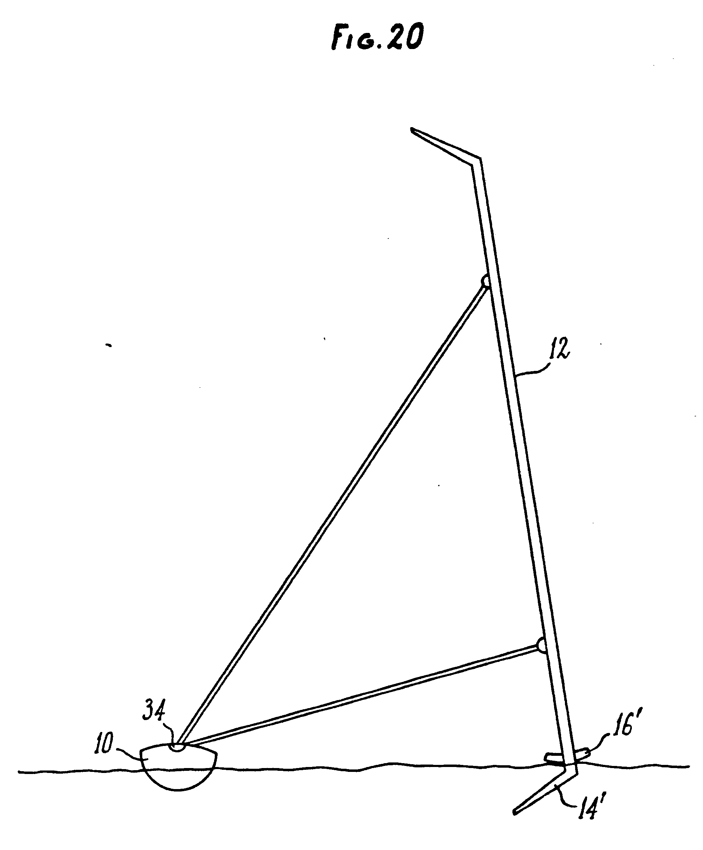

Dans l'exemple de réalisation décrit ci-dessus, la voilure est solidaire de la coque du navire ou du flotteur de l'engin flottant, et cette coque ou flotteur bascule avec le système de propulsion. On peut prévoir un autre mode de réalisation, dans lequel la coque demeure fixe et horizontale, l'ensemble propulsif (voilure 12 + plans hydroporteurs 14-14') basculant lors des changements de bord ou suivant les réglages. Cette variante a été représentée sur les Figures 13 et 20. On voit que les bielles 22-22', 24-24' sont articulées autour des pivots tels que 34; un moyen, schématisé en 36, contrôle les positionnements de la voilure 12 et du flotteur 10.

Dans le cas d'un engin lourd, tel que représenté sur la Figure 14, l'ensemble des commandes et de la tenue de la voilure, et en particulier le basculement du système de propulsion, peut être purement mécanique. On a vu que, dans cet exemple de réalisation, le système de bielles était remplacé par un mât unique 26, tenant la voilure 12 par un point d'articulation unique 28, les commandes étant rassemblées dans ce mât.

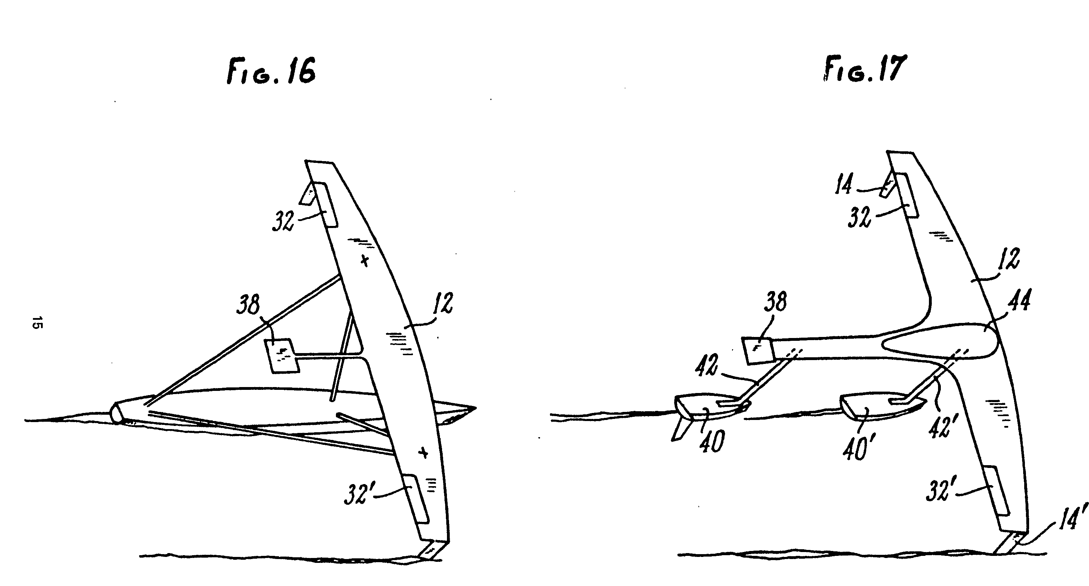

Dans le cas d'un engin plus léger, il est nécessaire d'utiliser la force aérodynamique pour provoquer le basculement de la voilure. On prévoit dans ce sens des volets 32-32' (Figures 2, 10, 11, 15, 16). On peut également commander l'incidence I de la voilure 12 en utilisant un gouvernail aérodynamique 38 (Fig. 16). On peut prévoir une disposition similaire pour les plans hydroporteurs 14, 14'.

On notera que les axes de rotation des déplacements de la voilure et des plans hydroporteurs ou "foils" sont parallèles aux axes principaux (longitudinal, horizontal, transversal). On peut cependant simplifier la manoeuvre, en prévoyant des axes non horizontaux et non parallèles à l'axe de l'engin flottant.

Les Figures suivantes montrent diverses allures de l'engin flottant équipé du système de propulsion décrit ci-dessus:

**Tribord amures:** Figures 3, 8, 10, 11 (dans cette Figure, la voilure est orientée avec une flèche f basse en avant) et 12;

**Babord amurés:** Figures 2, 7, 14 à 16.

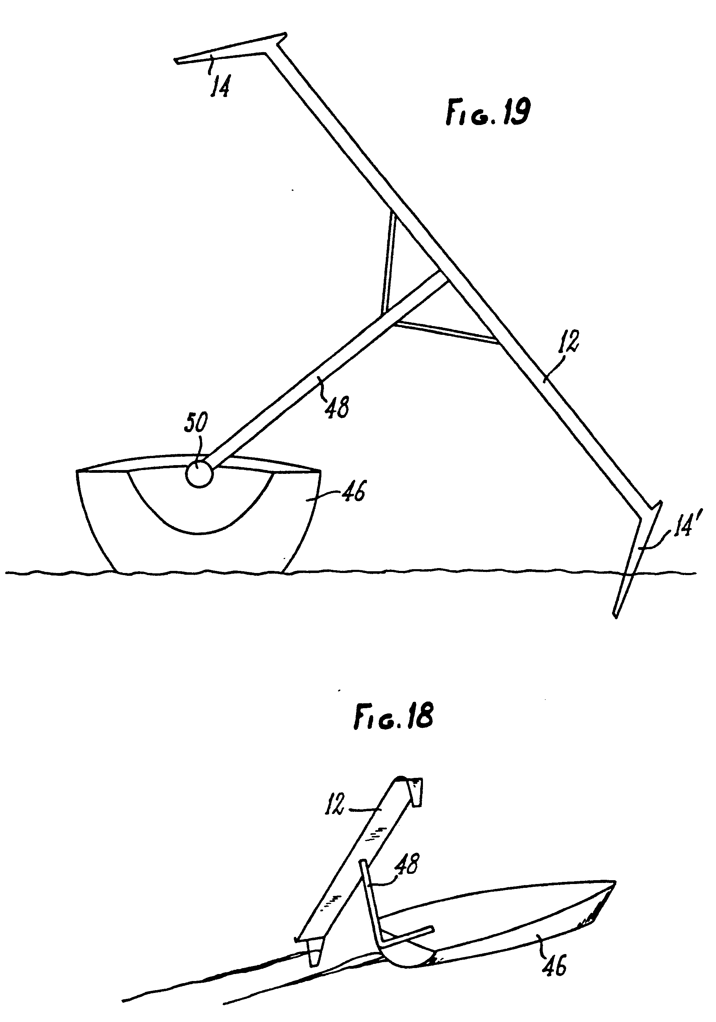

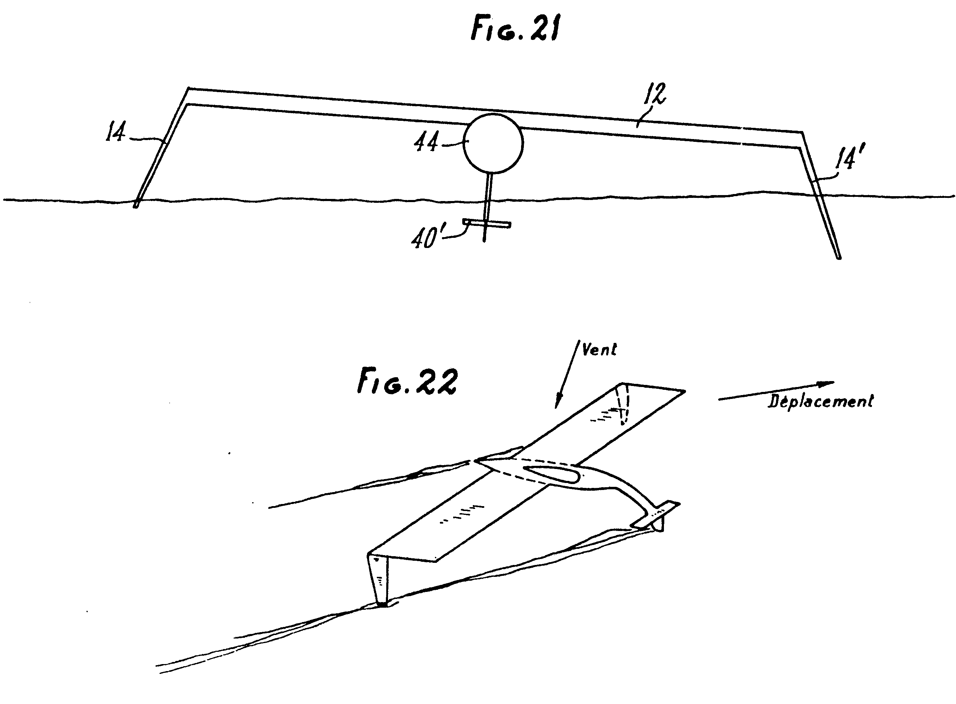

Dans la variante représentée sur la Figure 17, la flottabilité est assurée par plusieurs flotteurs 40, 40', munis de dérives et de gouvernails, et éventuellement de plans porteurs (foils), la voilure étant supportée par des mâts tels que 42, 42'. Le poste de commande 44 ést transféré dans la voilure 12, et les flotteurs peuvent être rétractés au niveau du poste de commande pour assurer la propulsion par très fort vent, comme on le décrira ci-après en référence aux Figures 21 à 23.

L'engin décrit ci-dessus correspond à une utilisation par vent moyen ou fort, conditions de temps pour lesquelles la stabilité pose un problème, mais pour lesquelles le poids est supérieur à la poussée de la voilure.

Par petit temps (Figure 20), pour obtenir le meilleur rendement, la voilure doit être positionnée verticalement, étant donné que le problème posé par le couple de chavirage n'existe plus. On voit que c'est particulièrement dans ces conditions que les flotteurs auxiliaires, tels que 16', jouent leur rôle.

Dans le cas d'un vent très fort (Figures 21 à 23), la force de sustentation s'exerçant sur la voilure devient plus importante que le poids, et il est nécessaire de basculer de plus en plus l'engin, jusqu'à ce que l'un des plans hydroporteurs 14, 14' touche l'eau. A ce moment, l'engin rétracte ses flotteurs 40, 40', de manière à "flotter" sur l'air, la surface anti-dérivé étant à ce moment assurée par les plans hydroporteurs 14, 14' et les gouvérnails des flottéurs. L'attitude du bateau est assurée soit par les mouvements des plans hydroporteurs et du gouvernail, soit par ceux des volets 32-32' et du gouvernail de profondeur 38.

Le système de propulsion décrit ci-dessus peut également être appliqué comme propulseur auxiliaire d'un bateau à voile ou à moteur, à la manière d'un moteur hors-bord. Cette variante est représentée sur les Figures 18 et 19. La voilure 12, avec ses plans hydroporteurs 14, 14', est montée sur un arbre 48 articulé en 50, à l'arrière de la coque 46 du bateau.

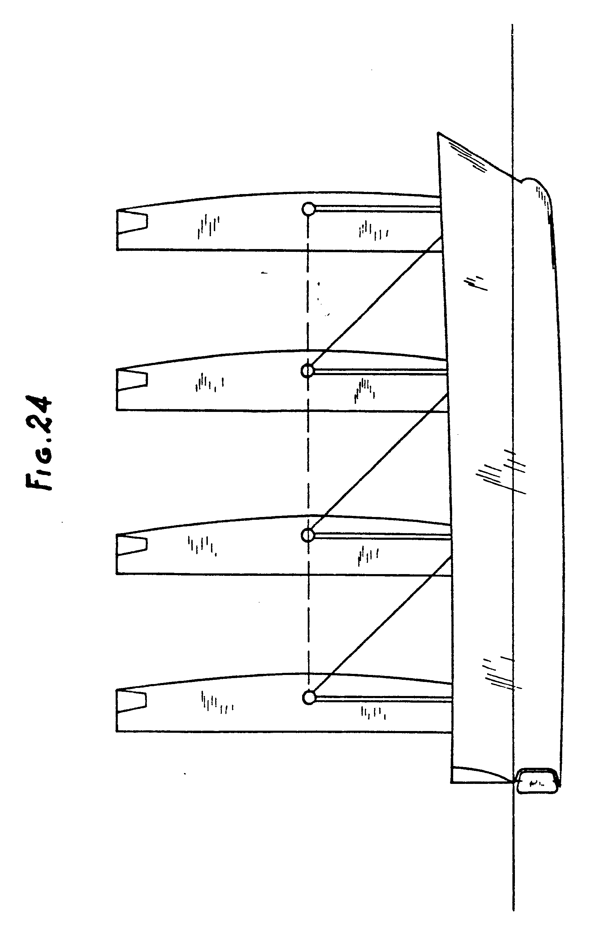

Le même système de propulsion peut être utilisé comme moyen de propulsion pour navires de charge, en en groupant plusieurs les uns derrière les autres. Cette variante a été représentée sur la Figure 24. Les différentes voiles sont montées sur des supports pouvant se rabattre, afin de mettre le système à plat sur le pont du navire.

La description faite ci-dessus montre que le système propulsif de l'engin selon l'invention présente beaucoup de degrés de liberté:

a) pour la voilure, six degrés de liberté:
- 3 positionnements spatiaux;
- 3 positionnements de rotation.

b) pour les foils: trois rotations.

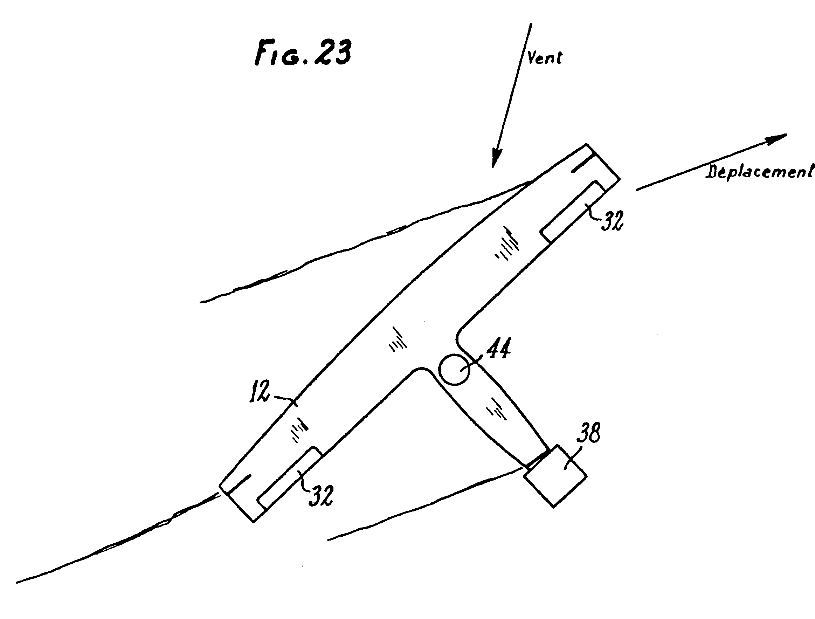

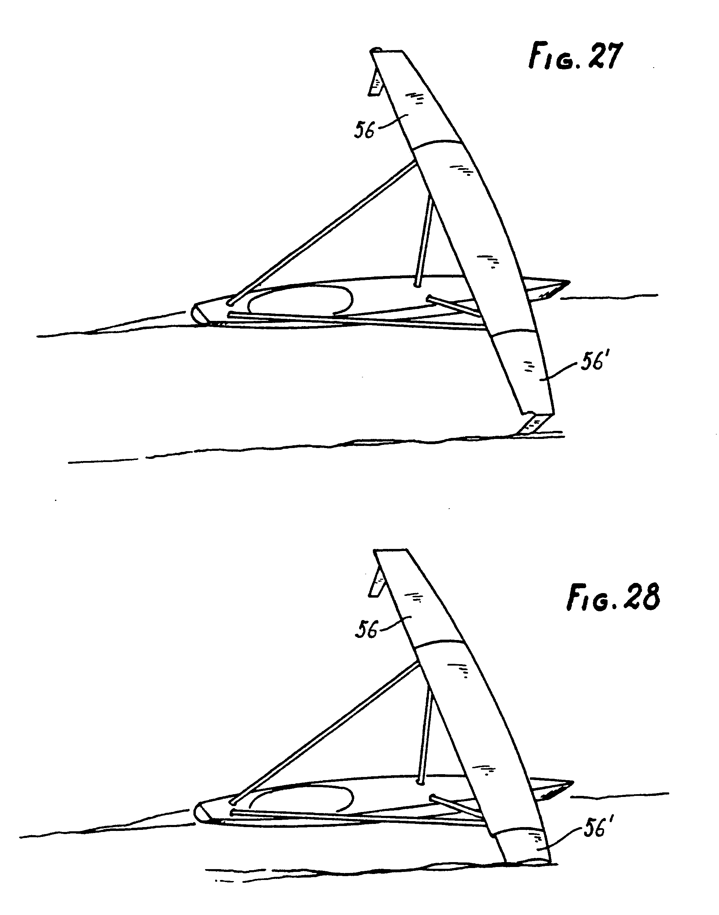

En ce qui concerne la voilure, l'un de ces facteurs est déterminé automatiquement par le niveau de l'eau. Il reste cependant un nombre trop élevé de dégrés de liberté à gérer. C'est la raison pour laquelle on prévoit une variante simplifiée (Figures 23 et 26), dans laquelle les foils et l'axe de la voilure sont calés par rapport au bateau (l'angle $\hat{\gamma}$ est fixe). L'ensemble foils + voilure est monté sur un mât 52 (ou plusieurs mâts) à profilage orientable, qui peut basculer autour d'un axe 54 incliné par rapport à l'horizontale. Le seul degré de liberté qui subsiste est l'incidence de la voilure par rapport au vent (angle $\hat{\theta}$), et le fait que la voilure peut basculer d'un bord sur l'autre. Dans ce cas, l'axe de rotation est un axe incliné longitudinalement (angle $\hat{\varphi}$), afin que la voile se retrouve semblable à elle-même d'un bord sur l'autre.

On remarquera qu'à l'arrêt, il est nécessaire de porter la voile si l'on veut éviter qu'elle ne s'enfonce dans l'eau:

a) soit l'engin est suffisamment lourd pour porter le couple de la voilure;

b) soit on prévoit des petits flotteurs aux extrémités de la voilure, comme on l'a décrit ci-dessus;

c) soit, c'est le volume même de l'extrémité de la voile qui assure le support de la voilure. Dans cette variante, (Figures 27 et 28), il est nécessaire que l'ensemble du profil de l'aile constituant la voilure ait son extrémité mobile, afin de pouvoir naviguer dans l'eau sans trop de traînée.

Dans cette variante, illustrée par les Figures 27 et 28, la voilure comporte à ses extrémités deux portions mobiles 56 et 56', qui assurent une portance hydrostatique à l'arrêt et aux faibles vitesses, étant donné que ces deux portions mobiles peuvent s'orienter dans l'axe de déplacement de l'engin. L'incidence des deux portions mobiles d'extrémités peut également permettre de créer une portance différentielle, lorsque l'aile est complètement émergée, afin de jouer le rôle d'un aileron.

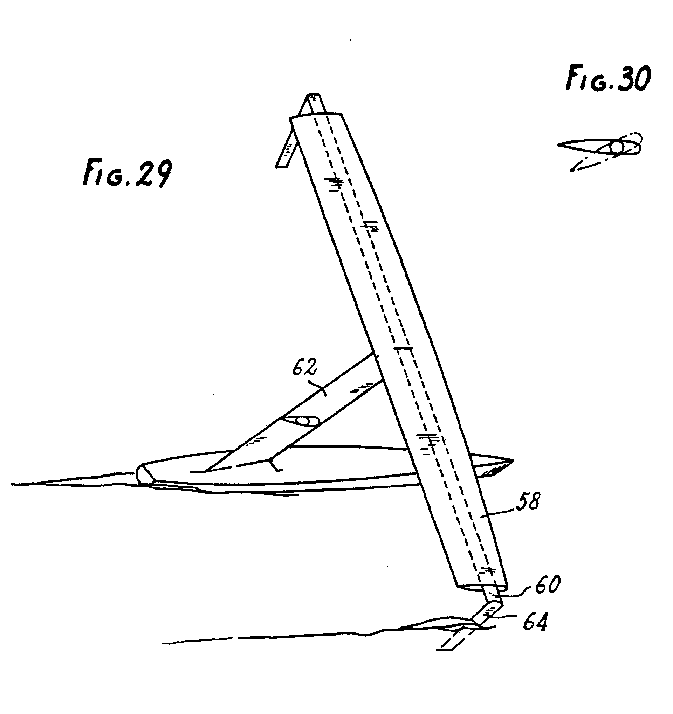

La variante de l'invention représentée sur les Figures 29 et 30 tend à simplifier la construction et les commandes, dans le cas d'une aile à calage fixe. Dans cette variante, la voilure proprement dite 58 n'est pas porteuse, et la fonction structurale est créée par un longeron 60, indépendant de la voilure, mais solidaire des foils 64 et du mât 62, l'aile, ou une partie de celle-ci, oscillant autour du longeron (Figure 30).

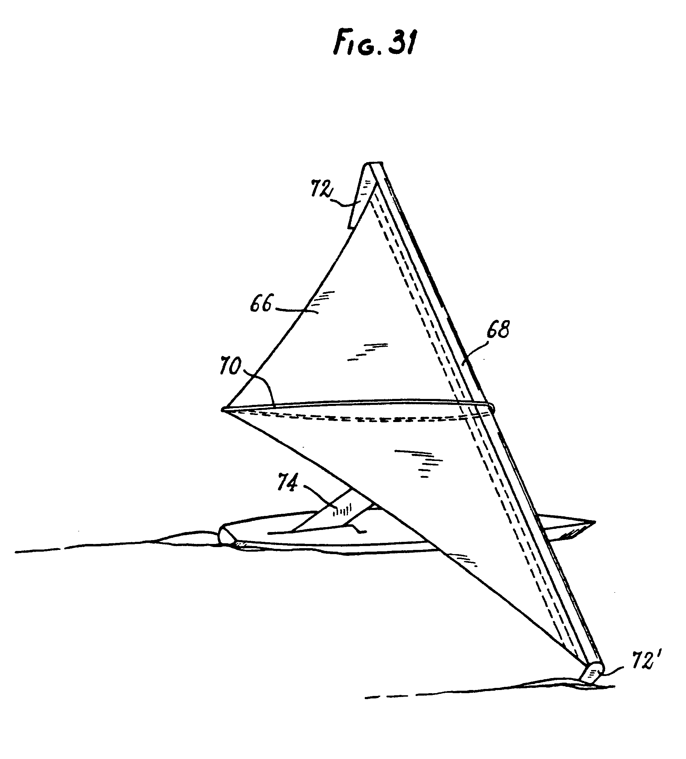

La Figure 31 illustre une variante dans laquelle la voilure est constituée d'un tissu souple 66, tenu par un longeron porteur 68 et tendu par un espar, tel qu'un wishbone 70. Le longeron 68 est muni des foils 72, et l'ensemble est supporté par un mât 74. La voilure souple 66 peut éventuellement s'enrouler à l'intérieur du longeron 68.

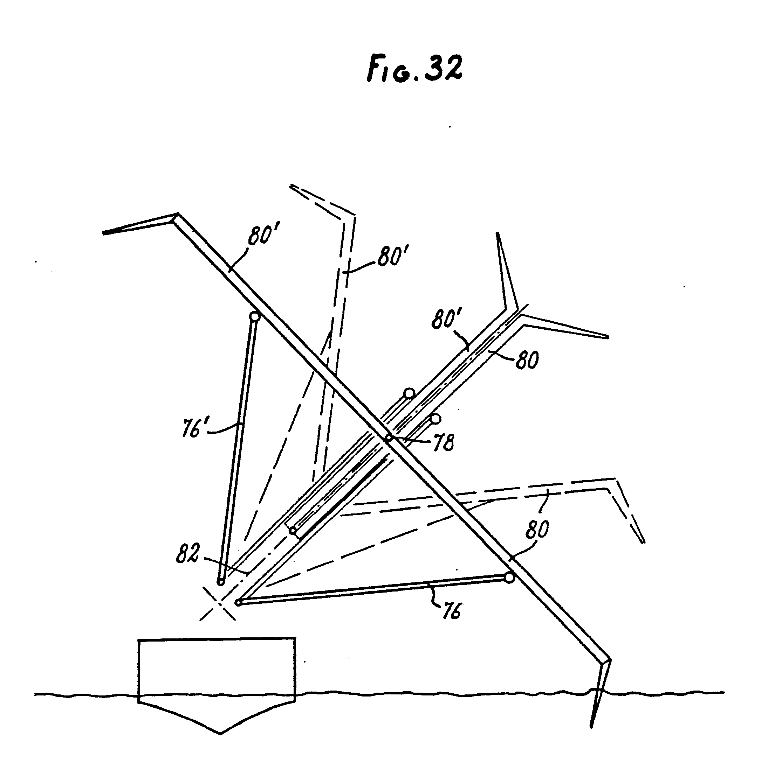

Pour diminuer l'encombrement de la voilure, notamment au port, on peut prévoir (Figure 32) une aile en deux parties 80, 80' repliables autour d'un axe central 78, l'aile, maintenue par deux bras supports 76 et 76', se repliant entre ces deux bras, par exemple à l'aide d'une bielle ou d'un câble de commande 82.

Outre les caractéristiques décrites et/ou représentées ici, on peut encore prévoir les caractéristiques supplémentaires suivantes, en vue d'améliorer la marche de l'engin selon l'invention:

a) profilage fixe ou oscillant autour des mâts, afin de diminuer le fardage;

b) positionnement du poste de commande dans le mât ou dans la voilure, également pour réduire le fardage;

c) vrillage des foils entre la partie inférieure et la partie supérieure, afin de tenir compte d'une optimisation du profil en fonction de l'enfoncement et de la vitesse.

Le système de propulsion selon l'invention peut comprendre des commandes manuelles, éventuellement complétées par des systèmes électriques, hydrauliques ou pneumatiques, pouvant être assistés par des processeurs.

On notera que, bien que l'engin décrit ici se rapproche, par certains aspects, de l'aéronautique, le système de propulsion selon l'invention reste essentiellement nautique, car il tire son énergie de la différence de vitesse, de viscosité et de densité entre l'air et l'eau.

**Revendications**

1. Système de propulsion pour engins nautiques, notamment bateaux à voiles, constitué par une voile comportant un ou plusieurs plans hydroporteurs directement montés sur l'extrémité de la voilure, les plans hydroporteurs étant directement contrôlables en flèche, caractérisé en ce que les plans hydroporteurs (14-14') sont également contrôlés en incidence ($\delta$), afin de contrôler à la fois la portance et l'immersion, l'ensemble étant monté sur un flotteur (10) par l'intermédiaire d'un moyen de support, de manière que l'ensemble voilure (12) + plans hydroporteurs (14-14') puisse basculer d'un bord sur l'autre, le moment de chavirage du bateau étant annulé par le couple de forces voilure + plans hydroporteurs et par le moment du poids du flotteur, la force propulsive ($\rightarrow$ F) de la voilure et la force (AD) exercée sur les plans hydroporteurs concourant à proximité du centre de gravité (P) du bateau.

2. Système de propulsion selon la revendication 1, caractérisé en ce qu'il constitue un ensemble symétrique basculant tribord-babord, par rapport au flotteur (10) de l'engin nautique ou à la coque du bateau sur lequel il est monté, afin de pouvoir marcher d'un bord sur l'autre.

3. Système de propulsion selon l'une des revendications 1 ou 2, caractérisé en ce qu'il est articulé sur le flotteur (10) d'un engin nautique ou sur la coque d'un bateau, de manière à constituer un système isolé qui, lors des virements de bords, bascule sur ce flotteur ou sur la coque, celle-ci demeurant fixe.

4. Système de propulsion selon l'une des revendications précédentes, caractérisé en ce que l'ensemble voilure (12)-plans hydroporteurs (14-14') est monté sur le flotteur (10) ou une coque de bateau par l'intermédiaire de moyens tels qu'un système de bielles (22-22', 24-24') ou de mât (26), pouvant être articulé par rapport à la coque ou au flotteur et/ou par rapport à la voilure (12).

5. Système de propulsion selon l'une quelconque des revendications précédentes, caractérisé en ce que la voilure (12) comporte une voile supplémentaire (30-30'), pouvant être dépliée soit dans un sens perpendiclaire à la voilure (12), soit dans un sens transversal à cette voilure.

6. Système de propulsion selon l'une quelconque des revendications précédentes, caractérisé en ce qu'on prévoit des volets (32-32') sur les bords de fuite de ladite voilure (12), afin d'utiliser la force aérodynamique pour provoquer le basculement de l'ensemble voilure (12)-plans hydroporteurs (14-14').

7. Système de propulsion selon l'une quelconque des revendications précédentes, caractérisé en ce qu'on prévoit un ou plusieurs gouvernails aéro- ou hydrodynamiques (38) pour commander et contrôler l'incidence de la voilure et/ou des plans hydroporteurs.

8. Système de propulsion selon l'une quelconque des revendications précédentes, caractérisé en ce que, par vent très fort, la voilure (12) est placée de façon sensiblement horizontale, les plans hydroporteurs (14-14') et le gouvernail constituant des surfaces anti-dérive, de manière que l'engin puisse voler au-dessus de l'eau, suivant un effet de sol, en utilisant la force du vent, l'engin flottant sur lequel est monté ledit système de propulsion pouvant comporter des flotteurs rétractables (40-40').

9. Système de propulsion selon l'une quelconque des revendications précédentes, caractérisé en ce que l'ensemble voilure (12) - plans hydroporteurs (14-14') est utilisé comme propulseur auxiliaire d'un bateau à voile ou à moteur en le montant à l'arriére de la coque (46) dudit bateau, par l'intermédiaire d'un matereau (48) articulé sur la poupe du bateau.

10. Système de propulsion selon l'une quelconque des revendications 1 à 8, destiné à la propulsion des navires de charge, caractérisé en ce qu'on groupe plusieurs ensembles voilure-plans hydroporteurs les uns derrière les autres, les moyens de support des ensembles de propulsion étant conçus de façon à les rabattre et à les mettre à plat sur lepont du navire.

11. Système de propulsion selon l'une quelconque des revendications précédentes, caractérisé en ce qu'il comporte des moyens de commande manuels pouvant être remplacés ou complétés par des systèmes de commande électriques, hydrauliques ou pneumatiques, éventuellement assistés par des processeurs.

**Patentansprüche**

1. Antriebssystem für Seefahrzeuge, insbesondere Segelboote, das aus einem Segel besteht, das eine oder mehrere unmittelbar an den Enden des Segels angeordnete Finnen aufweist, wobei der von diese Finnen mit dem Lot gebildete Winkel unmittelbar steuerbar ist, dadurch gekennzeichnet, dass der Anstellwinkel (δ) der Finnen (14-14') zur gleichzeitigen Steuerung der Tragfähigkeit und des Eintauchens auch gesteuert wird, wobei das Gaze auf einem Schwimmer (10) über ein Traggestell so angeordnet ist, dass das durch das Segel (12) und die Finnen (14-14') gebildete Ganze von einem Bord zum andern Bord schwenken kann, wobei das Umschlagemoment des Bootes durch das Kräftepaar Segel + Finnen und das Moment des Schwimmergewichtes ausgeglichen wird und die Antriebskraft ($\rightarrow$F) des Segels und die auf die Finner ausgeübte Kraft (AD) im Schwerpunkt des Bootes zusammenlaufen.

2. Antriebssystem nach Anspruch 1, dadurch gekennzeichnet, dass es ein symmetrisches Ganzes bildet, das in bezug auf den Schwimmer (10) des Seefahrzeuges bzw. auf den Bootsrumpf von Steuerbord zu Backbord schwenken kann, was die Möglichkeit bietet, von einem Bord zum anderen zu fahren.

3. Antriebssystem nach einem der Ansprüche 1 oder 2, dadurch gekennzeichnet, dass es mit dem Schwimmer (10) eines Seefahrzeuges bzw. dem Rumpf eines Bootes so gelenkig verbunden ist, dass es ein abgesondertes System bildet, das bei den Wendungen auf dem Schwimmer bzw. dem Rumpf schwenkt, der unbeweglich bleibt.

4. Antriebssystem nach einem der Ansprüche 1 bis 3, dadurch gekennzeichnet, dass das durch das Segel (12) und die Finnen (14-14') gebildete Ganze auf dem Schwimmer (10) bzw. einem Bootsrumpf über solche Mittel, wie ein Pleuelsystem (22-22', 24-24') bzw. einen Mast (26), die in bezug auf den Rumpf bzw. den Schwimmer und/oder auf das Segel (12) gelenkig angeordnet werden können.

5. Antriebssystem nach einen der Ansprüche 1 bis 4, dadurch gekennzeichnet, dass das Segel (12) einem zusätzlichen Teil (30-30') aufweist, der entweder senkrecht oder quer zum Segel (12) entfaltet werden kann.

6. Antriebssystem nach einem der Ansprüche 1- bis 5, dadurch gekennzeichnet, dass an den hinteren, aussenliegenden Rändern des Segels (12) Klappflächen (32-32') vorgesehen sind, die es ermöglichen, die Luftstromkraft zum Schwenken vom durch das Segel (12) und die Finnen (14-14') gebildeten Ganzen zu benutzen.

7. Antriebssystem nach einem der Ansprüche 1 bis 6, dadurch gekennzeichnet, dass ein bzw. mehrere aero-und hydrodynamische Steuer (38) zur Steuerung und Prüfung der Einfallwinkel des Segels und/oder der Finnen vorgesehen sind.

8. Antriebssystem nach einem der Ansprüche 1 bis 7, dadurch gekennzeichnet, dass das Segel (12) bei heftigem Wind im wesentlichen waagerecht gerichtet ist, wobei die Finnen (14-14') und das Steuer als die Abtrift verhindernde Flächen wirken, so dass das Fahrzeug über das Wasser fliegen kann, indem er eine Bodenwirkung und die Kraft des Windes benutzt, wobei das Seefahrzeug, auf welchem das Antriebssystem angeordnet ist, zurücknehmbare Schwimmer (40-40') aufweisen kann.

9. Antriebssystem nach einem der Ansprüche 1 bis 8, dadurch gekennzeichnet, dass das durch das Segel (12) und die Finnen (14-14') gebildete Ganze zum Vorwärtstreiben eines Segel- oder Motorschiffs benutzt wird, indem es am Hinterteil des Rumpfes (46) des Schiffs mittels eines am Hinterteil des Schiffes angelenkten Teils (48) montiert wird.

10. Antriebssystem nach einem der Ansprüche 1 bis 8, zum Vorwärtstreiben von beladenen Schiffen, dadurch gekennzeichnet, dass mehrere durch Segel und Finnen gebildete Ganze hintereinander angeordnet sind, wobei die Traggestelle der Antriebsvorrichtungen so ausgebildet sind, dass sie abgeschlagen und auf dem Deck des Schiffes platt gelegt werden können.

11. Antriebssystem nach einem der Ansprüche 1 bis 10, dadurch gekennzeichnet, dass es Mittel zur Handsteuerung aufweist, die durch elektrische hydraulische bzw. pneumatische Steuersysteme ersetzt oder ergänzt werden können die gegebenenfalls durch Prozessors unterstützt werden können.


**Claims**

1. Propulsion system for sailing craft, notably sailing ships, comprising a sail provided with one or several foils directly mounted on the end of said sail, the swéepback angle of said foils being directly controllable, characterized in that the incidence angle (δ) of said foils (14-14') is also controllable, in order to control the lift and the immersion forces at a time, the system being mounted on a float (10) via a support means, so that the sail (10) and foils (14-14') assembly may tilt from one board to the other, the capsizing torque of the craft being cancelled by the forces torque sail + foils and by the moment of the float weigh, the propulsive force (→F) of the sail surface and the force (AD) exerted on said foils converging in the vicinity of the center of gravity (p) of the craft.

2. Propulsion system according to claim 1, characterized in that it forms a symmetrical assembly tilting from starboard to port relative to the float (10) of the craft or to the hull of the ship on which it is mounted, in order to progress on one board or the other.

3. Propulsion system according to one of claims 1 or 2, characterized in that it is articulated on the float (10) of a craft or on the hull of a ship so as to form an isolated system which, when there are tackings, tilts on said float or on the hull, which remains fixed.

4. Propulsion system according to any one of the preceding claims, characterized in that the sail (12) and foils (14-14') assembly is mounted on the float (10) or on the hull of a ship via a means such as a connecting rod system (22-22', 24-24') or a mast (26), which can be articulated relative to the hull or to the float and/or relative to the sail (12).

5. Propulsion system according to any one of the preceding claims, wherein the sail surface (12) comprises an extra sail (30-30') which can be unfolded either in a direction perpendicular to the sail surface (12) or in a direction transverse to said sail surface.

6. Propulsion system according to any one of the preceding claims, wherein there are provided flaps (32, 32') on the trailing edges of sail surface (12) in order to use the aerodynamic force for causing the tilting of the sail (12) and foils (14-14') assembly.

7. Propulsion system according to any one of the preceding claims, wherein there are foreseen one or several aero or hydrodynamic rudders (38) for controlling and checking the incidence of the sail surface and/or of the foils.

8. Propulsion system according to any one of the preceding claims, wherein, when the wind is very strong, the sail surface (12) is placed substantially horizontally, the foils (14-14') and the rudder forming anti-drift surfaces, so that the craft can fly above the water, according to a ground effect, by using the force of the wind, whereby the floating craft on which is mounted said propulsion system can comprise retractable floats (40-40').

9. Propulsion system according to any one of the preceding claims, wherein the sail surface (12) and foils (14-14') assembly is used as auxiliary propeller for a sailing or motor ship by mounting it at the rear of the hull (46) of said ship, via a small mast (48) articulated on the stern of the ship.

10. Propulsion system according to any one of claims 1 to 8, for the propulsion of cargo boats, characterized in that several sail surface and foils assemblies are grouped one behind the others, the support means of the propulsion assemblies being designed such as to fold them down flat on the boat deck.

11. Propulsion system according to any one of the preceding claims, characterized in that it comprises manual control means, which can be replaced or completed by electrical, hydraulic or pneumatic control systems, with the eventual assistance of processors.

Fig.1

Fig.4

Fig.5

Fig.6

Fig. 2

32

22

22'

24

24'

32'

Fig. 7

Vent

12

10

14'

Fig. 8

12

Vent

10

14

Fig. 3

Vent

22

24

24'

14'

12

10

20

18

14

Fig. 9

F

Fr

Y

f

Fp

X

12

Vent

22

24

10

Fig.10

# Fig.11

32

12

22

24

32'

10

Vent

Fig.12

30

12

a b

30'

10

Fig.13

14

22

12

36

34

24

14'

10

Fig. 14

Fig. 15

Fig. 16

Fig. 17

0 084 995

Fig. 19

Fig. 18

# Fig. 20

Fig. 21

Fig. 22

Fig. 23

Fig.24

Fig. 25

Fig. 26

Fig. 27

56

56'

Fig. 28

56

56'

FIG.30

FIG.29

62

58

60

64

FIG. 31

# Fɪɢ.32